Europäisches Patentamt

European Patent Office

Office européen des brevets

(19)

(11) Veröffentlichungsnummer : **0 433 886 B1**

(12) ## EUROPÄISCHE PATENTSCHRIFT

(45) Veröffentlichungstag der Patentschrift :
**02.03.94 Patentblatt 94/09**

(51) Int. Cl.$^5$ : **C01F 11/00, C01F 11/18,
C04B 33/13**

(21) Anmeldenummer : **90124064.8**

(22) Anmeldetag : **13.12.90**

(54) **Verfahren zur Herstellung einer anorganischen Barium-haltigen Feststoffzusammensetzung.**

(30) Priorität : **21.12.89 DE 3942242**

(43) Veröffentlichungstag der Anmeldung :
**26.06.91 Patentblatt 91/26**

(45) Bekanntmachung des Hinweises auf die
Patenterteilung :
**02.03.94 Patentblatt 94/09**

(84) Benannte Vertragsstaaten :
**DE ES FR IT**

(56) Entgegenhaltungen :
**DD-A- 160 591
DD-A- 224 019
DE-A- 2 034 065
DE-C- 483 514**

(73) Patentinhaber : **Kali-Chemie
Aktiengesellschaft
Hans-Böckler-Allee 20
D-30173 Hannover (DE)**

(72) Erfinder : **Porta, Jacopo
Via Frasso 64
I-55046 Querceta (Luca) (IT)**

(74) Vertreter : **Lauer, Dieter, Dr.
c/o Kali-Chemie Aktiengesellschaft
Hans-Böckler-Allee 20
D-30173 Hannover (DE)**

EP 0 433 886 B1

## Beschreibung

Die Erfindung betrifft ein Verfahren zur Herstellung einer als Zusatzmittel in gebrannten Tonwaren geeigneten anorganischen Barium-haltigen Feststoffzusammensetzung, die nach dem Verfahren erhältlichen, als Zusatzmittel für die Herstellung gebrannter Tonwaren verwendbaren wasserunglöslichen Produkte, und ihre Anwendung bei der Herstellung gebrannter Tonwaren.

Die Bariumsulfid-Laugerei ist ein Verfahrensschritt im Verlauf der Herstellung von Bariumverbindungen. Ausgangsmaterial ist das natürlich vorkommende Mineral Schwerspat (Baryt). Schwerspat enthält etwa 92 bis 98 Gew.-% Bariumsulfat und weiterhin wechselnde Mengen von Calcium- und Eisensalzen sowie Silikat. Der gemahlene Schwerspat wird mit feingemahlener Kohle vermischt und bei hohen Temperaturen (ca. 1.200 °C) zu Bariumsulfid reduziert. Die abgekühlte, Bariumsulfid enthaltende erstarrte Schmelze wird mit heißem Wasser unter Bildung von Bariumsulfid-Lauge extrahiert. Die bei dieser Bariumsulfid-Laugerei gewonnene Bariumsulfid-Lauge wird weiter umgesetzt, beispielsweise zu Bariumcarbonat, welches in der Glasindustrie verwendet wird.

Bei der Bariumsulfid-Laugerei verbleibt ein Rückstand. Dieser Rückstand, der, sofern er nicht getrocknet wird. als wasserhaltiger Schlamm anfällt, enthält neben etwas Kohle vorwiegend Bariumsalze, ferner Calciumsalze. Diese liegen insbesondere in Form von Carbonaten, Schwefelverbindungen und Silikaten vor. Diese Laugereirückstände wurden bislang deponiert. Dies ist jedoch ökologisch nicht wünschenswert und zudem eine Verschwendung wertvoller potentieller Rohstoffe.

Die DD-A 160 591 beschreibt die Verwendung von unbehandelten Rückständen der Bariumsulfid-Laugerei als Zusatzmittel für keramische Massen, u. a. auch für die Herstellung von Mauerziegeln. Versuche haben gezeigt, daß unerwünschte Ausblühungen beim Tonbrennen (Effloreszenz) durch dieses Zusatzmittel nicht im gewünschten Maß verhindert werden.

Aufgabe der Erfindung war es, ein Verfahren zu entwickeln, das die Aufarbeitung diese Laugereirückstände zu industriell verwertbaren Rohstoffen ermöglicht. Diese Aufgabe wird durch das erfindungsgemäße Verfahren gelöst.

Erfindungsgemäß werden die Laugenrückstände aus der Bariumsulfidlaugerei unter Herstellung einer anorganischen Barium-haltigen, als Zusatzmittel für die Herstellung gebrannter Tonwaren geeigneten Feststoffzusammensetzung aufgearbeitet.

Das erfindungsgemäße Verfahren zur Herstellung einer anorganischen, Barium-haltigen Feststoffzusammensetzung ist dadurch gekennzeichnet, daß man Laugereirückstände aus der Bariumsulfid-Laugerei in wäßrigem Medium mit Kohlendioxid, einem Kohlendioxid enthaltenden Gasgemisch, Alkalihydrogencarbonat oder Alkalicarbonat umsetzt zu einem, die Feststoff zusammensetzung und eine wäßrige Schwefelwasserstoff- oder Alkalisulfid-Lösung enthaltenden Reaktionsgemisch, und die Feststoffzusammensetzung aus dem Reaktionsgemisch abtrennt.

Es ist möglich, reines Kohlendioxid oder Kohlendioxid enthaltende Gasgemische, beispielsweise Verbrennungsgase, zu verwenden. Zweckmäßig geht man von Alkalicarbonat aus und erhält dann ein die Feststoffzusammensetzung und eine wäßrige Alkalisulfid-Lösung enthaltendes Reaktionsgemisch. Anhand dieser zweckmäßigen Ausführungsform wird die Erfindung näher beschrieben.

Die Laugereirückstände können in getrockneter Form oder als wasserhaltiger Schlamm, beispielsweise mit einem Wassergehalt von bis zu 50 Gew.-% oder mehr, eingesetzt werden. Da die Laugereirückstände im Laugungsverfahren wasserhaltig anfallen und die Umsetzung der Rückstände mit Alkalicarbonat in Wasser durchgeführt wird, ist es unnötig, die Laugereirückstände zu trocknen. Sie werden deshalb bevorzugt wasserhaltig in der Form eingesetzt, wie sie beim Laugungsverfahren anfallen. Der Wassergehalt der bei der Laugerei anfallenden Laugereirückstände kann im weiten Bereich schwanken, liegt üblicherweise aber zwischen etwa 30 und 50 Gew.%, bezogen auf das Gesamtgewicht der feuchten Rückstände.

Unter "Alkalicarbonat" werden im Rahmen der vorliegenden Erfindung die Carbonate von Metallen der ersten Hauptgruppe des Periodensystems und Ammonium verstanden. Entsprechendes gilt für die Hydrogencarbonate. Bevorzugt setzt man Alkalicarbonat, insbesondere Natriumcarbonat ein.

Das Alkalicarbonat kann in fester Form oder vorzugsweise als wäßrige Lösung eingesetzt werden. Gewünschtenfalls kann das für die Umsetzung benötigte Alkalicarbonat in situ erzeugt werden, z.B. durch Über- oder Einleiten von Kohlendioxid oder Kohlendioxid enthaltenden Gasen über eine bzw. in eine Mischung der Laugereirückstände und Alkalilauge. Es ist technisch jedoch viel einfacher, von Alkalicarbonat auszugehen.

Die Reaktionskomponenten können auf verschiedene Weisen in die Reaktionsmischung eingebracht werden. Beispielsweise kann man getrocknete Laugereirückstände und festes Alkalicarbonat mit der gewünschten Menge an Wasser mischen. Ein Teil der gewünschten Menge an Wasser kann auch in Form des im wasserhaltigen Laugereirückstand enthaltenen Wassers in die Reaktionsmischung eingebracht werden. Weiterhin ist es möglich, die trockenen oder bereits wasserhaltigen Laugereirückstände in Wasser zu suspendieren und auf diese Weise einen Teil oder auch das gesamte Wasser in die Reaktionsmischung einzubringen. Schließlich kann man auch eine wäßrige Alkalicarbonat-Lösung einsetzen und auf diese Weise einen Teil oder das gesamte gewünschte Wasser in die Reaktionsmischung einbringen.

In einer bevorzugten Ausführungsform des erfindungsgemäßen Verfahrens geht man aus von wasserhaltigen Laugereirückständen, wie sie im Laugereiverfahren anfallen, erzeugt eine Suspension dieser Laugereirückstände im Wasser und setzt das Alkalicarbonat als wäßrige Lösung ein.

Das für die Erzeugung der Suspension und/oder die Herstellung der wäßrigen Alkalicarbonat-Lösung benötigte Wasser kann zweckmäßigerweise ganz oder teilweise ersetzt werden durch Filtrate und/oder Waschlösungen, die aus vorhergehenden Reaktionsansätzen stammen und Alkalisulfid enthalten. Der Alkalisulfid-Gehalt solcher Lösungen sollte unterhalb etwa 15 Gew.-% liegen. Durch die Rückführung der bei dem Verfahren anfallenden Alkalisulfidlösung und/oder Waschwasser in nachfolgende Reaktionsansätze wird der Wasserverbrauch im erfindungsgemäßen Verfahren erheblich reduziert.

In einer bevorzugten Ausführungsform des erfindungsgemäßen Verfahrens erzeugt man eine wäßrige Suspension der Laugerei-Rückstände. Der Wassergehalt dieser Suspension kann in einem weiten Bereich schwanken, z.B. von 30 bis 90 Gew.-% Wasser, bezogen auf das Gesamtgewicht der Suspension. Technisch gut handhabbar sind Suspensionen, deren Wassergehalt zwischen 30 und 80 Gew.-%, bevorzugt zwischen 40 und 60 Gew.-% liegt.

Bevorzugt setzt man weiterhin eine wäßrige Alkalicarbonat-Lösung, insbesondere eine wäßrige Natriumcarbonat-Lösung ein. Die Alkalicarbonat-Konzentration kann in einem weiten Bereich schwanken, beispielsweise von etwa 2 Gew.-% bis hin zur Sättigungsgrenze. Zweckmäßig sind wäßrige Lösungen, die Alkalicarbonat in einer Konzentration von etwa 5 bis 15 Gew.-% enthalten.

Die Umsetzung der Laugereirückstände mit Alkalicarbonat wird in Anwesenheit von Wasser durchgeführt. Der Wassergehalt in der Reaktionsmischung aus Laugereirückständen, Alkalicarbonat und Wasser kann in einem weiten Bereich schwanken. Zweckmäßig liegt er zwischen etwa 25 und etwa 90 Gew.-%, bezogen auf das Gesamtgewicht dieser Reaktionsmischung. Man kann natürlich auch mit geringerem Wassergehalt arbeiten. Dies ist jedoch bei der technischen Durchführung weniger zweckmäßig, ebenso das an sich mögliche Arbeiten bei größerem Wassergehalt als 90 Gew.-%. Gute Ergebnisse werden erzielt, wenn der Wassergehalt zwischen etwa 50 und etwa 70 Gew.-%, bezogen auf das Gesamtgewicht der Reaktionsmischung, liegt.

Die Erfindung wird im folgenden unter Verwendung von Natriumcarbonat weiter erläutert.

Das Natriumcarbonat kann in einem Unterschuß, in einem Überschuß oder entsprechend derjenigen Menge eingesetzt werden, die stöchiometrisch zur Überführung der im Laugereirückstand enthaltenen Barium- und Calciumverbindungen in Carbonate und des vorhandenen Siliciumdioxids oder der Silikate in Natriumsilikat notwendig wäre. Bevorzugt setzt man das Natriumcarbonat in einer solchen Menge ein, die dem 0.5 bis 1,5-fachen der stöchiometrisch zur Überführung des in den Laugereirückständen enthaltenen Bariumsulfids, Bariumthiosulfats und Bariumsilikats sowie Calciumhydroxids in die entsprechenden Carbonate notwendig ist. Besonders bevorzugt setzt man das Alkalicarbonat in der in etwa stöchiometrisch notwendigen Menge ein.

Die Umsetzung der Laugereirückstände mit Alkalicarbonat wird bei Temperaturen von etwa 15 bis 100 °C durchgeführt.

Die Umsetzung wird zweckmäßig so lange durchgeführt, bis der Gehalt an iodometrisch bestimmbaren reduzierenden Substanzen, insbesondere reduzierenden Schwefelverbindungen, weniger als 3 Gew.-%, vorzugsweise zwischen etwa 0,1 und 2,5 Gew.-% beträgt. Zur Ermittlung kann man regelmäßig Proben entnehmen und eine entsprechende Bestimmung durchführen.

Bei der Umsetzung werden lösliche Barium- und Calciumverbindungen, insbesondere schwefelhaltige Bariumverbindungen, in wasserunlösliches Carbonat überführt. Die neben dem Feststoff vorliegende wäßrige Lösung enthält Natriumsulfid und Natriumsilikat.

Nach beendeter Umsetzung trennt man die Feststoffzusammensetzung von der überstehenden Lösung ab. Hierzu bedient man sich bekannter Methoden, beispielsweise kann man filtrieren, zentrifugieren oder dekantieren.

Die abgetrennte Lösung enthält, wie schon gesagt, Natriumsulfid und kann zur Gewinnung des Natriumsulfids aufkonzentriert werden. Gemäß einer bevorzugten Ausführungsform des erfindungsgemäßen Verfahrens kann man die Alkalisulfid-Lösung, gewünschtenfalls nach Verdünnen oder Aufkonzentrieren, ganz oder teilweise zur Erzeugung der Suspension der Laugereirückstände oder zur Herstellung der Alkalicarbonat-Lösung verwenden.

Die abgetrennte Barium-haltige Feststoffzusammensetzung ist ein wertvolles Produkt, welches sich als Zusatzmittel zur Herstellung gebrannter Tonwaren und in der Zementherstellung eignet. Es kann zu diesem Zweck feucht oder trocken eingesetzt werden. Vorteilhafterweise wird die Feststoffzusammensetzung vor ihrer Verwendung als derartiges Zusatzmittel noch ein- oder mehrmals mit sulfidfreiem Wasser gewaschen und getrocknet. Die hierbei anfallenden Waschlösungen können ganz oder teilweise zur Erzeugung der wäßrigen Suspension oder der Alkalicarbonat-Lösung in das Verfahren rückgeführt werden.

Die Erfindung betrifft ferner die Anwendung der im erfindungsgemäßen Verfahren erhältlichen anorganischen, Barium-haltigen Feststoffzusammensetzung als Zusatzmittel zur Herstellung gebrannter Tonwaren.

Ein bekanntes Problem bei der Herstellung von gebrannten Tonwaren, beispielsweise Ziegeln, ist es, daß, sofern der Ton und/oder die zu seiner Herstellung benötigten Hilfsstoffe, z.B. das Anmachwasser, Sulfat enthalten, es zu unerwünschten Ausblühungen (Effloreszenz) und Verfärbungen des gebrannten Tons kommt. Es ist bereits bekannt, daß der Zusatz einer geringen Menge an reinem Bariumkarbonat die Bildung solcher Ausblühungen verhindert. Das Bariumcarbonat wird in technisch reiner Form - Reinheitsgrad etwa 95 Gew.-% und mehr - angewendet und dem noch nicht gebrannten trockenen oder feuchten Ton zugesetzt. Die Herstellung des Bariumcarbonats mit diesem Reinheitsgrad ist aufwendig.

Überraschenderweise wurde nun gefunden, daß die nach dem erfindungsgemäßen Verfahren erhältlichen Feststoffzusammensetzung ein vorteilhaftes Zusatzmittel für die Herstellung gebrannter Tonwaren darstellt.

Die erfindungsgemäßen Zusatzmittel für die Herstellung gebrannter Tonwaren in Form der beim erfindungsgemäßen Verfahren erhältlichen Feststoffzusammensetzungen sind im wesentlichen chloridfrei und weisen einen jodometrisch bestimmbaren Gehalt an reduzierenden Verunreinigungen, insbesondere Schwefelverbindungen, von weniger als etwa 3 Gew.-% auf. Bevorzugt liegt der Gehalt unter etwa 2,5 Gew.-%, z.B. zwischen 0,1 und 2,5 Gew.-% bezogen auf die Trockenmasse.

Ihr Gehalt an Bariumverbindungen, die in Salzsäure löslich sind, beträgt, ausgedrückt als Bariumcarbonat, vorteilhafterweise zwischen etwa 15 und etwa 90 Gew.-%, vorzugsweise zwischen etwa 35 und etwa 70 Gew.-% und besonders bevorzugt zwischen etwa 40 und etwa 50 Gew.-%. Diese in Salzsäure löslichen Bariumverbindungen umfassen Bariumcarbonat und Bariumsilikat.

Es ist bekannt, daß die im Tonzusatzmittel enthaltenen reduzierenden Substanzen einen Teil des vorhandenen Bariumcarbonats in Bezug auf die Verhinderung der Effloreszenz unwirksam machen.

Es wird angenommen, daß pro 1 Gew.-% an reduzierenden Substanzen im Tonzusatzmittel etwa 6 Gew.-% an vorhandenem Bariumcarbonat unwirksam werden. Enthält ein Tonzusatzmittel beispielsweise 2 Gew.-% reduzierende Substanzen und 45 Gew.-% Bariumcarbonat, so sind etwa 33 Gew.-% wirksames Bariumcarbonat vorhanden.

Es ist vorteilhaft, wenn das erfindungsgemäße Zusatzmittel so viel in Salzsäure lösliche, als Bariumcarbonat ausgedrückte Bariumverbindungen enthält, daß, unter Berücksichtigung des Gehaltes an reduzierenden Verbindungen, der Gehalt an effektiv wirksamen Bariumverbindungen größer als etwa 20 Gew.-%, vorzugsweise größer als etwa 30 Gew.-% bezogen auf die Trockenmasse des Tonzusatzmittels ist.

Sofern ein Zusatzmittel erwünscht ist, das einen bestimmten Bariumcarbonat-Gehalt aufweisen soll, ist es möglich, diesen bestimmten Gehalt durch Zusatz von Bariumcarbonat zu einer erfindungsgemäß erhaltenen Feststoffzusammensetzung mit geringerem als dem gewünschten Bariumcarbonat-Gehalt oder aber durch Zusatz von geeigneten Zuschlagstoffen, beispielsweise Ton oder CaCO$_3$ zu einer erfindungsgemäß erhaltenen Feststoffzusammensetzung mit höheren als dem gewünschten Bariumcarbonat-Gehalt einzustellen. Gewünschtenfalls kann man aber auch die Bariumsulfid-Laugung so durchführen, daß Laugerei-Rückstände mit dem gewünschten Gehalt anfallen.

Ein ganz hervorragendes Zusatzmittel wird erhalten, wenn man die Laugereirückstände mit einer solchen Menge an Natriumcarbonat umsetzt, die in etwa der stöchiometrisch zur Umwandlung des im Laugereirückstand enthaltenen Bariumsulfids, Bariumthiosulfats, Bariumsilikats und Calciumhydroxids in die entsprechenden Carbonate notwendigen Menge entspricht. Die hierbei erhaltene Feststoffzusammensetzung weist nach dem Waschen und Trocknen hervorragende Eigenschaften auf. Ihre, die Bildung von Ausblühungen beim Brennen von Ton verhindernde Aktivität ist sehr gut, die Zusammensetzung ist fließfähig, leicht zu dosieren, kann gut in Silos gelagert werden und ist einfach zu transportieren. Die in dieser Feststoffzusammensetzung neben Bariumcarbonat enthaltenen inerten Bestandteile sind als Tonzuschlag geeignet. Da die Feststoffzusammensetzung chloridfrei ist, ist sie zudem nicht korrosiv.

Die Eignung der bei der erfindungsgemäßen Aufarbeitung von Laugereirückständen erhältlichen Feststoffzusammensetzungen als Tonzuzsatzmittel ist überraschend. Die beim erfindungsgemäßen Verfahren erhaltene Feststoffzusammensetzung unterscheidet sich in ihrem Gehalt an Barium nur ganz geringfügig von den zu ihrer Herstellung eingesetzten Laugereirückständen. Die unbehandelten Laugereirückstände sind als Tonzusatzmittel jedoch ganz ungeeignet. Erst das erfindungsgemäße Verfahren wandelt die unbrauchbaren Rückstände in wertvolle Produkte um.

Gegenstand der Erfindung ist somit auch die Anwendung der beim erfindungsgemäßen Verfahren erhältlichen Feststoffzusammensetzung als Zusatzmittel für die Herstellung von gebrannten Tonwaren. Sie eignet sich besonders zur Anwendung bei sulfathaltigen Tonen und wird den feuchten oder trockenen Tonen in einer Menge von 0,1 bis 10 Gew.-%, bezogen auf die Trockenmasse des Tons, zugesetzt. setzt. Die bei bestimmten.

Tonen zuzusetzende Menge des erfindungsgemäßen Zusatzmittels kann der Fachmann gegebenenfalls durch einfache Vorversuche leicht ermitteln.

Die Herstellung der gebrannten Tonwaren erfolgt in bekannter Weise. Man kann prinzipiell beliebige, sulfathaltige Tone in feuchtem oder trockenem Zustand mit dem feuchten, bevorzugt mit dem trockenen Zusatzmittel vermischen. Übliche Hilfsmittel, beispielsweise Magerungsmittel wie Sand, Tonerde oder gebrannte Tone, Wasser, Flußmittel wie Feldspat oder Eisenoxide oder Färbungsmittel können ebenfalls zugesetzt werden. Die erhaltenen Tonmischungen werden, wie üblich, getrocknet und gebrannt. Die Brenntemperatur liegt im üblichen Bereich, gewöhnlich zwischen 900 °C und 2000 °C. Im unteren Bereich erhält man Irdengut, dazu gehören auch Ziegel, im höheren Bereich erhält man Sinterware, auch Tonzeug genannt.

Bei den unter Anwendung der erfindungsgemäßen Tonzusatzmittel hergestellten gebrannten Tonwaren handelt es sich insbesondere um Ziegel, Dachziegel, Bodenfliesen oder Blumentöpfe.

Das erfindungsgemäße Verfahren ermöglicht somit, die Menge an zu deponierenden Laugereirückständen der Bariumsulfid-Laugerei erheblich oder vollständig zu reduzieren und ergibt wertvolle Produkte mit überraschenden vorteilhaften Eigenschaften.

Die folgenden Beispiele sollen die Erfindung weiter erläutern, ohne sie in ihrem Umfang einzuschränken.

Ausführungsbeispiele

Beispiel 1:

Aufarbeitung der Laugereirückstände der Bariumsulfid-Laugerei

Eingesetzt wurde ein bei der Bariumsulfidlaugerei anfallender Laugereirückstand mit den in Tabelle 1. Spalte "Laugereirückstand" angegebenen Analysendaten. Dieser Laugereirückstand wurde nicht getrocknet, sondern wasserhaltig eingesetzt. Das Gesamtgewicht des eingesetzten Laugereirückstandes betrug 1.538 kg, wobei 538 kg auf das enthaltene Wasser entfielen.

Dieser feuchte, schlammartige Laugereirückstand wurde in 766 kg einer wäßrigen Natriumsulfid-Lösung suspendiert. Diese Lösung ($Na_2S$-Gehalt etwa 3,6 Gew.-%) stammte aus Waschlösungen und Filtraten früherer Verfahrensansätze.

Der suspendierte Laugereirückstand wurde mit 613 kg einer wäßrigen Lösung versetzt, die Natriumcarbonat in einer Konzentration von etwa 13,9 Gew.-% enthielt. Zur Herstellung dieser Natriumcarbonat-Lösung wurden ebenfalls ein Teil der aus früheren Verfahrensansätzen stammenden Waschlösungen und Filtrate verwendet.

Die Reaktionsmischung von Laugereirückständen, Wasser und Natriumcarbonat wurden nun unter Durchmischung mit einem Rührwerk etwa 1 Stunden lang bei einer Temperatur von etwa 45 °C gehalten. Anschließend wurde der Feststoff von der überstehenden Lösung abfiltriert, zweimal mit je 766 kg sulfidfreiem Wasser gewaschen und jeweils filtriert. Anschließend wurde der gewaschene Feststoff getrocknet. Ausbeute: 1000 kg.

Die erhaltenen Filtrate und Waschlösungen wurden vereinigt und zum Teil zur Suspendierung des Laugereirückstands und der Herstellung der Natriumcarbonat-Lösung für weitere Verfahrensansätze rückgeführt, der übrige Teil der vereinigten Filtrate wurde zur Gewinnung des enthaltenen Natriumsulfids getrocknet. Natriumsulfid ist ein wertvolles Produkt und wird beispielsweise in der Gerbereiindustrie verwendet.

Der nach zweimaligem Waschen und Trocknen erhaltene Feststoff fiel als im wesentlichen chloridfreies, freifließendes Pulver an. Das spezifische Gewicht dieses Stoffes betrug 3,33 g/cm3 und das Schüttgewicht 0.59 g/cm$^3$. weitere Analysendaten des Feststoffes sind in Tabelle 1, Spalte "erfindungsgemäßes Zusatzmittel" zusammengestellt.

Tabelle 1    Analysendaten der verwendeten Laugereirückstände und des hergestellten Zusatzmittels

| | Analysen-methode | Laugereirück-stand[1] | erfindungsge-mäßes Zusatz-mittel[1] |
|---|---|---|---|
| wasserlös-liches Barium | gravimetrisch | 10 | 5 |
| in HCl lös-liches Ba-rium [2] | gravimetrisch | 43 | 45 |
| wasserlösliche und -unlös-liche reduzie-rende Substan-zen | iodometrisch | 5 | 2 |
| entstandenes $H_2S$ und $SO_2$ | Absorption in Iod | 2 | 0,6 |
| Inertstoffe[3] = Rest auf 100 Gew.-% | | | |

1) Angabe in Gew.-%, bezogen auf das Gesamtgewicht
   der Trockenmasse
2) ausgedrückt als $BaCO_3$
3) $SiO_2$, $CaCO_3$, $BaSO_4$, C, Wasser

Beispiel 2:

Verwendung des in Beispiel 1 hergestellten Feststoffes als Zusatzmittel für getrocknete Tone zur Herstellung gebrannter Tonwaren.

Allgemeine Versuchsvorschrift:

Es wurde ein handelsüblicher Ton (Quelle: Cotto Toscano, San Quirico, Dorcia, Siena, Italien) verwendet, der 12.6 Gew.-% Wasser enthielt. Dieser Ton enthielt weiterhin insgesamt 0.75 Gew.-% Gesamtschwefel, davon waren 0.25 Gew.-% (als SO3 berechnetes) lösliches Sulfat und 0,49 Gew.-% (als $SO_3$ berechneter) Pyritschwefel.

Der erdfeuchte Ton wurde zunächst 24 Stunden lang bei 110 °C getrocknet, dann gemahlen und gesiebt. Verwendet wurde die Fraktion, deren Partikeldurchmesser kleiner als 0,5 mm war. Jeweils 100 g dieser erhaltenen getrockneten Tonfraktion wurde mit verschiedenen Mengen des in Beispiel 1 hergestellten Zusatzmittels gemischt. Nach dem Vermischen wurden 20 g Wasser zugemischt (dies ist die von Ziegelherstellern empfohlene Wassermenge). Aus der wasserhaltigen Mischung wurde ein Würfel von etwa 100 g geformt, der nach dem Formen 24 Stunden lang bei 80 °C getrocknet wurde. Die getrockneten Würfel wurden dann jeweils folgendermaßen gebrannt:

Die Temperatur der Würfel wurde langsam und gleichmäßig von etwa 30 °C binnen 17 Stunden auf 1.050 °C gebracht. Bei Erreichen dieser Temperatur wurden die Würfel 1 Stunde lang bei dieser Temperatur gehalten und anschließend langsam und gleichmäßig binnen 15 Stunden von 1.050 °C auf 150 °C gebracht. Dann wurden die Würfel dem Brennofen entnommen und im Hinblick auf die zu beobachtende Effloreszenz beurteilt. Das Produkt mit der stärksten beobachteten Effloreszenz wurde mit "xxxxxx" beurteilt, Produkte mit jeweils geringerer Effloreszenz mit "xxxxx", "xxxx" usw. Produkte, bei denen eine Effloreszenz optisch nicht feststellbar war, wurden mit "o" beurteilt.

In den Versuchsreihen 2.1 bis 2.6 wurde den getrockneten Tonen das in Beispiel 1 erhaltene Zusatzmittel

EP 0 433 886 B1

in verschiedenen Mengen zugesetzt. Versuch 2.7 ist ein Vergleichsversuch, in welchem der Ton ohne Zusatzmittel, ansonsten aber analog wie in den Versuchsreihen 2.1 bis 2.6 behandelt wurde.

In Tabelle 2 sind die in den Versuchsreihen 2.1 bis 2.6 eingesetzten Mengen an Zusatzmittel sowie die Beurteilung der beobachteten Effloreszenz zusammengestellt. In Tabelle 2 findet sich ferner das Ergebnis des Vergleichsversuchs 2.7.

```
Tabelle 2    Eingesetzte Mengen an Zusatzmittel und beob-
             achtete Effloreszenz der gebrannten Tone der
             Versuchsreihen 2.1 bis 2.6 sowie des Ver-
             gleichsbeispiels 2.7
```

| Versuchs-Nr. | Eingesetzte Menge an Zusatzmittel[1] | Einschätzung der Effloreszenz |
|---|---|---|
| 2.1 | 0,5 | xxxx |
| 2.2 | 0,75 | xxx |
| 2.3 | 1,00 | xx |
| 2.4 | 1,25 | x |
| 2.5 | 1,50 | x |
| 2.6 | 1,75 | o |
| Vergleichsbeispiel 2.7 | -- | xxxxx |

```
1) in Gramm pro 100 Gramm Ton-Trockenmasse
```

Aus der Tabelle 2 ergibt sich, daß bereits bei einer Menge von 1,75 g Zusatzmittel pro 100 g Ton-Trockenmasse keine Effloreszenz mehr beobachtet wird.

Beispiel 3:

Anwendung des erfindungsgemäßen Zusatzmittels bei der Herstellung gebrannter Tonwaren durch Zumischung zu erdfeuchtem Ton.

Verwendet wurde das in Beispiel 1 hergestellte Zusatzmittel und der in Beispiel 2 beschriebene Ton. Der Ton wurde diesesmal jedoch nicht getrocknet, sondern in erdfeuchtem Zustand, also mit etwa 12,6 Gew.-% Wasser, mit dem Zusatzmittel vermischt. Die weitere Durchführung des Beispiels 3 erfolgte analog zu Beispiel 2.

Es wurden zwei Versuche 3.1 und 3.2 mit unterschiedlichen Mengen an eingesetztem Zusatzmittel durchgeführt. Die eingesetzten Mengen und die Beurteilung der Effloreszenz der gebrannten Würfel sind in Tabelle 3 zusammengestellt. In Tabelle 3 ist weiterhin das Ergebnis eines Vergleichsversuches 3.3 angegeben, das analog mit diesem erdfeuchten Ton, jedoch ohne Zumischung eines Zusatzmittels durchgeführt wurde.

7

Tabelle 3    Eingesetzte Mengen an Zusatzmittel und beobachtete Effloreszenz der gebrannten Tone der
Versuchsreihen 3.1 und 3.2 sowie des Vergleichsbeispiels 3.3

| Versuchsnr. | Eingesetzte Menge an Zusatzmittel [1] | Einschätzung der Effloreszenz |
|---|---|---|
| 3.1 | 1,00 | 0 |
| 3.2 | 2,00 | 0 |
| Vergleichs-beispiel 3.3 | -- | xxxxxx |

Die Tabelle 3 zeigt, daß bei erdfeucht eingesetztem Ton die Wirkung des erfindungsgemäßen Zusatzmittels besonders augenfällig ist.

Beispiel 4:

Beispiel 1 wurde wiederholt. Diesmal wurde der Teil der erhaltenen Filtrate und Waschlösungen, der nicht zur Suspendierung des Laugereirückstandes und zur Herstellung der Natriumcarbonat-Lösung rückgeführt wurde, durch Einengen in eine wäßrige Natriumsulfid-Lösung, die etwa 60 Gew.-% Natriumsulfid enthielt, überführt.

**Patentansprüche**

1. Verfahren zur Herstellung einer anorganischen, Barium-haltigen Feststoffzusammensetzung, dadurch gekennzeichnet, daß man Laugereirückstände aus der Bariumsulfid-Laugerei in wäßrigem Medium mit Kohlendioxid, Kohlendioxid enthaltenden Gasgemischen, Alkalihydrogencarbonat oder Alkalicarbonat umsetzt zu einem die Feststoffzusammensetzung und eine wäßrige Schwefelwasserstoff- oder Alkalisulfid-Lösung enthaltenden Reaktionsgemisch, und die Feststoffzusammensetzung aus dem Reaktionsgemisch abtrennt.

2. Verfahren nach Anspruch 1, dadurch gekennzeichnet, daß man die Laugereirückstände in Form einer Suspension in Wasser einsetzt.

3. Verfahren nach Anspruch 1 oder 2, dadurch gekennzeichnet, daß man Alkalicarbonat verwendet.

4. Verfahren nach einem der vorhergehenden Ansprüche, dadurch gekennzeichnet, daß man das Alkalicarbonat in Form einer wäßrigen Lösung einsetzt.

5. Verfahren nach Anspruch 4, dadurch gekennzeichnet, daß man eine wäßrige Lösung verwendet, die das Alkalicarbonat in einer Menge von 5 bis 15 Gew.-% enthält.

6. Verfahren nach einem der vorhergehenden Ansprüche, dadurch gekennzeichnet, daß man das Alkalicarbonat in der 0.5 bis 1.5-fachen Menge derjenigen Menge einsetzt, die stöchiometrisch zur Umwandlung des im Laugereirückstand enthaltenen Bariumsulfids, Bariumthiosulfats, Bariumsilikats und Calciumhydroxids in Bariumcarbonat und Calciumcarbonat notwendig ist.

7. Verfahren nach einem der vorhergehenden Ansprüche, dadurch gekennzeichnet, daß man als Alkalicarbonat Natriumcarbonat verwendet.

8. Verfahren nach Anspruch 1, dadurch gekennzeichnet, daß man die abgetrennte Feststoffzusammensetzung einmal oder mehrmals mit Wasser wäscht.

8

9. Verfahren nach Anspruch 1, dadurch gekennzeichnet, daß man die erhaltene Feststoffzusammensetzung trocknet.

10. Verfahren nach einem der vorhergehenden Ansprüche, dadurch gekennzeichnet, daß man der abgetrennten Feststoffzusammensetzung Bariumcarbonat oder inerte Tonzuschlagstoffe, insbesondere Calciumcarbonat, zumischt, bis der Gehalt an Bariumcarbonat zwischen etwa 15 und etwa 90 Gew.-%, vorzugsweise zwischen etwa 40 und 50 Gew.-%, bezogen auf die Trockenmasse, beträgt.

11. Verfahren nach einem der vorhergehenden Ansprüche, dadurch gekennzeichnet, daß man die bei der Abtrennung der Feststoffzusammensetzung erhaltene wäßrige, Alkalisulfid enthaltende Lösung und/oder beim Waschen der Feststoffzusammensetzung erhaltenes Waschwasser ganz oder teilweise zur Erzeugung der Suspension der Laugereirückstände und/ oder zur Erzeugung der wäßrigen Alkalicarbonat-Lösung rückführt.

12. Anorganische, Barium-haltige Feststoffzusammensetzung, erhältlich nach dem Verfahren gemäß einem der Ansprüche 1 bis 11.

13. Feststoffzusammensetzung nach Anspruch 12, dadurch gekennzeichnet, daß sie im wesentlichen chloridfrei ist, einen Gehalt an in Salzsäure löslichen Bariumverbindungen, ausgedrückt als Bariumcarbonat, zwischen etwa 15 und 90 Gew.-%, vorzugsweise zwischen etwa 40 und 50 Gew.-% und daß sie an iodometrisch bestimmbaren reduzierenden Substanzen, insbesondere reduzierenden Schwefelverbindungen, weniger als 3 Gew.-%, vorzugsweise 0,1 bis 2.5 Gew.-%, bezogen auf die Trockensubstanz, enthält.

14. Feststoffzusammensetzung nach Anspruch 12 oder 13, dadurch gekennzeichnet, daß der Wassergehalt zwischen etwa 0 und 50 Gew.-% beträgt.

15. Anwendung der Feststoffzusammensetzung gemäß einem der Ansprüche 12 bis 14 als Zusatzmittel zur Herstellung gebrannter Tonwaren.

16. Anwendung nach Anspruch 15, dadurch gekennzeichnet, daß man das Zusatzmittel sulfathaltigen Tonen in einer Menge von 0.1 bis 10 Gew.-%, bezogen auf die Trockenmasse des ungebrannten Tones, zusetzt.

**Claims**

1. Process for the preparation of an inorganic barium-containing solid composition, characterised in that leaching residues from barium sulphide leaching are reacted with carbon dioxide, carbon dioxide-containing gas mixtures, alkali metal hydrogencarbonate or alkali metal carbonate in an aqueous medium to give a reaction mixture containing the solid composition and an aqueous hydrogen sulphide or alkali metal sulphide solution, and the solid composition is separated from the reaction mixture.

2. Process according to Claim 1, characterised in that the leaching residues are used in the form of an aqueous suspension.

3. Process according to Claim 1 or 2, characterised in that alkali metal carbonate is used.

4. Process according to one of the preceding claims, characterised in that the alkali metal carbonate is used in the form of an aqueous solution.

5. Process according to Claim 4, characterised in that an aqueous solution containing the alkali metal carbonate in an amount of from 5 to 15 % by weight is used.

6. Process according to one of the preceding claims, characterised in that the alkali metal carbonate is used in an amount 0.5 to 1.5 times that stoichiometrically required to convert the barium sulphide, barium thiosulphate, barium silicate and calcium hydroxide present in the leaching residue into barium carbonate and calcium carbonate.

7. Process according to one of the preceding claims, characterised in that the alkali metal carbonate used is sodium carbonate.

8. Process according to Claim 1, characterised in that the separated solid composition is washed one or more times with water.

9. Process according to Claim 1, characterised in that the solid composition obtained is dried.

10. Process according to one of the preceding claims, characterised in that barium carbonate or inert clay additives, in particular calcium carbonate, are admixed with the separated solid composition until the barium carbonate content is between about 15 and about 90 % by weight, preferably between about 40 and 50 % by weight, on a dry weight basis.

11. Process according to one of the preceding claims, characterised in that the aqueous alkali metal sulphide-containing solution obtained from the separation of the solid composition and/or the washing water obtained from the washing of the solid composition are recycled completely or in part to the production of the suspension of the leaching residues and/or to the production of the aqueous alkali metal carbonate solution.

12. Inorganic barium-containing solid composition obtainable by the process according to one of Claims 1 to 11.

13. Solid composition according to Claim 12, characterised in that it is essentially chloride-free, has a content of hydrochloric acid-soluble barium compounds, expressed as barium carbonate, of between about 15 and 90 % by weight, preferably between about 40 and 50 % by weight, and contains less than 3 % by weight, preferably from 0.1 to 2.5 % by weight, on a dry weight basis, of reducing substances which can be determined iodometrically, in particular reducing sulphur compounds.

14. Solid composition according to Claim 12 or 13, characterised in that the water content is between about 0 and 50 % by weight.

15. Use of the solid composition according to one of Claims 12 to 14 as an additive in the production of fired clay articles.

16. Use according to Claim 15, characterised in that the additive is added to sulphate-containing clays in an amount of from 0.1 to 10 % by weight, based on the dry weight of the unfired clay.

## Revendications

1. Procédé de production d'une composition minérale de matière solide contenant du baryum, caractérisé en ce qu'on fait réagir des résidus de lixiviation, provenant de la lixiviation du sulfure de baryum avec de l'anhydride carbonique, des mélanges gazeux contenant de l'anhydride carbonique, de l'hydrogéno carbonate alcalin ou du carbonate alcalin en milieu aqueux pour obtenir un mélange réactionnel contenant la composition de matière solide et une solution aqueuse d'hydrogène sulfuré ou de sulfure alcalin, et en ce qu'on sépare du mélange réactionnel la composition de matière solide.

2. Procédé selon la revendication caractérisé en ce qu'on utilise les résidus de la lixiviation sous la forme d'une suspension dans de l'eau.

3. Procécé selon la revendication 1 ou 2, caractérisé en ce qu'on utilise du carbonate alcalin.

4. Procédé selon l'une des revendications précédentes, caractérisé en ce qu'on utilise le carbonate alcalin sous la forme d'une solution aqueuse.

5. Procédé selon la revendication 4, caractérisé en ce qu'on utilise une solution aqueuse qui contient le carbonate alcalin présent en une quantité de 5 à 15 % en poids.

6. Procédé selon l'une des revendications précédentes, caractérisé en ce qu'on utilise le carbonate alcalin en une quantité représentant 0,5 à 1,5 fois la quantité stoéchiométrique nécessaire pour transformer en du carbonate de baryum et en du carbonate de calcium le sulfure de baryum, le thiosulfate de baryum, le silicate de baryum et l'hydroxyde de baryum contenus dans le résidu de lixiviation.

7. Procédé selon l'une des revendications précédentes, caractérisé en ce qu'on utilise comme carbonate alcalin le carbonate de sodium.

8. Procédé selon la revendication 1, caracterisé en ce qu'on lave une ou plusieurs fois à l'eau la composition de matière solide séparée.

9. Procédé selon la revendication 1, caractérisé en ce qu'on sèche la composition, de matière solide obtenue.

10. Procédé selon l'une des revendications précédentes, caractérisé en ce qu'on ajoute en mélangeant, à la composition de matière solide séparée, du carbonate de baryum ou des additifs inertes pour l'argile, en particulier du carbonate de calcium, jusqu'à ce que la teneur en carbonate de baryum se situe entre environ 15 et environ 90 % en poids, avantageusement entre environ 40 et 50 % en poids, par rapport à la masse sèche.

11. Procédé selon l'une des revendications précédentes, caractérisé en ce qu'on soumet la solution aqueuse contenant du sulfure alcalin et obtenue lors de la séparation de la composition de la matière solide et/ou l'eau de lavage obtenue lors du lavage de la composition de la matière solide, entièrement ou partiellement à du recyclage pour produire la suspension des résidus de lixiviation et/ou pour produire la solution aqueuse de carbonate alcalin.

12. Composition de matière solide minérale contenant du baryum, pouvant être obtenue selon le procédé selon l'une des revendications 1 à 11.

13. Composition de matière solide selon la revendication 12, caractérisée en ce qu'elle est essentiellement dépourvue de chlorure, en ce qu'elle présente une teneur en composés du baryum solubles dans l'acide chlorhydrique, exprimée en carbonate de baryum, comprise entre environ 15 et 90 % en poids, avantageusement entre environ 40 et 50 % en poids et en ce qu'elle contient moins de 3 % on poids, avantageusement 0,1 à 2,5 en poids, par rapport à la substance sèche, de substances réductrices, notamment des composés du soufre réducteurs déterminables par iodométrie.

14. Composition de matière solide selon la revendication 12 ou 13, caractérisée en ce que la teneur en eau se situe entre environ 0 et 50 % en poids.

15. Application de la composition de matière solide selon l'une des revendications 12 à 14 comme additif pour la production d'objets en argile cuite.

16. Application selon la revendication 15, caractérisé en ce qu'on ajoute, à des argiles contenant des sulfates, l'additif en une quantité de 0,1 à 10 % en poids, par rapport à la masse sèche de l'argile non cuite.